# EUROPEAN PATENT SPECIFICATION

(11) **EP 3 945 045 B1**
(45) Date of publication and mention of the grant of the patent: **01.10.2025**
(21) Application number: 21189044.7
(22) Date of filing: 02.08.2021
(51) Int. Cl.: B65G 11/06

(54) **MODULAR SPIRAL CHUTE FOR CONVEYING OBJECTS**
MODULAR SPIRAL CHUTE FOR CONVEYING OBJECTS
CHUTE A SPIRALE MODULAIRE POUR LE TRANSPORT D'OBJETS

(30) Priority: 31.07.2020 IT 202000018751
(43) Date of publication of application: 02.02.2022
(73) Proprietor: Ciemmecalabria S.r.l., 25046 Cazzago San Martino (BS) (IT)
(72) Inventor: CALABRIA, Paolo, CAZZAGO SAN MARTINO (BS) (IT); CALABRIA, Eugenio, CAZZAGO SAN MARTINO (BS) (IT)
(74) Representative: Colombo, Stefano Paolo

(56) References cited:
- WO-A1-2020/047376
- CN-U- 203 806 507
- CN-U- 204 957 549
- US-A- 1 256 724
- US-A- 1 766 681
- US-A1- 2021 078 803

## Description

### FIELD OF APPLICATION

The present invention relates to the sector involving moving objects from one position to another. In particular it relates to a spiral chute for conveying objects from a position located at a first height to a position located at a second height, lower than the first height.

### PRIOR ART

In the logistics sector, typically objects are transported and sorted inside buildings. The objects handled may be of any type, for example relatively large-size packages or small-size packets. Conveyors are installed inside the buildings where transportation or sorting is performed, in order to carry out this function. The conveyors may be configured so as to transport the objects in a flat configuration or transport them from one level to another, upwards or downwards.

In some cases, transportation of an object from an upper level to a lower level is performed by means of a spiral chute. A spiral chute allows an object to be moved from a first position located on a first level to a second position located on a lower level, namely a position lower than the first position.

In a spiral chute, the downwards movement of the object occurs by means of gravity, without use of a motorized conveyor belt. In other words, the object is made to slide along the surface of the spiral chute.

US9415936 describes a helical chute system for transporting articles from a higher level to a lower level inside a building. The system includes a chute wound around a vertical axis and secured on one or more inner edges by one or more support rods, wherein a part of the chute is composed of a plurality of angular chute segments secured together in a stepped relationship, wherein each segment of the chute has a first surface sloping downwardly towards a second surface below the first surface.

US8733529 describes a modular chute, along which the articles are slid, said chute consisting of: a frame formed by a rib, a bracket, a backbone member connected to the rib or bracket or to both ribs, and the bracket and a guide member connected to the rib or bracket or to the rib and bracket, and a curvilinear panel connected to the frame, and a lining arranged inside the frame, wherein the lining is formed by a plurality of sections.

WO 2020/047376 A1 discloses a modular chute for transporting articles.

US 1,256,724 discloses a spiral chute with the features of the preamble of claim 1.

CN 204957549U discloses a spiral chute.

### SUMMARY OF THE INVENTION

The Applicant has noted that the known spiral chutes have various drawbacks. In general, the known spiral chutes are relatively complicated to design (depending on the height along which the object must be moved) and to transport and assemble. They are also costly as a result.

In particular, the known spiral chutes are very bulky to transport and also comprise a metal structure with many parts which must be assembled. In one embodiment, flat plastic strips are placed on this metal structure and must be manually deformed or fixed by means of screw or rivets in order to keep them in position. This involves an assembly operation which takes time to perform.

Another drawback of the known spiral chutes is that they are relatively bulky viewed in plan view.

Furthermore they do not allow the downward movement of the article to be transported to be controlled in an optimum manner.

The Applicant has defined the aim of providing a novel spiral chute which is easier to install and which allows a greater modularity to be achieved compared to the spiral chutes of the known type. Moreover, another aim defined is that of providing a novel spiral chute which is able to reduce the amount of space occupied during transportation and may be assembled more quickly.

The aforementioned object is obtained by means of a plurality of ribs protruding in a cantilever manner from a central pillar and by a plurality of bottom sectors, each supported by two ribs. The bottom sectors, assembled together, form the downward spiral surface.

Advantageously, connections between the ribs, in addition to the bottom sectors which are load-bearing, are not envisaged.

According to one aspect of the invention, a spiral chute for conveying objects from a first position to a second position which is situated at a lower height than the first position is provided, the spiral chute comprising:
a central pillar;
a plurality of ribs protruding radially from the central pillar,
a plurality of bottom sectors, wherein each bottom sector is supported by two circumferentially successive ribs and wherein the plurality of bottom sectors forms a substantially continuous spiral surface from the first position to the second position,
   wherein the ribs comprise holes,
wherein at least one of the bottom sectors is a body comprising a sliding surface stiffened at least at one edge of the sliding surface and/or at the sliding surface,
wherein the sliding surface is stiffened at least at two opposite edges,
wherein the at least two stiffened edges of the bottom sector comprise respective stiffening lips,
wherein the respective stiffening lips are configured to fix the bottom sector with two ribs, the stiffening lips being bent with respect to the sliding surface of the bottom sector, and
wherein the stiffening lips comprise holes corresponding to the holes in the ribs for locking the bottom sector with two ribs.

According to embodiments, at least one bottom sector comprises a faceted surface.

According to embodiments, the faceted surface comprises geometric figures, for example triangles having a base on either the upper edge or the lower edge of the bottom sector and vertex on either the lower edge or the upper edge of the bottom sector, respectively.

According to embodiments, at least one bottom sector comprises a twisted plane.

According to embodiments, at least one of the bottom sectors is a molded or thermoformed body of a thermoplastic material or a body of metallic material or a body of composite material.

According to embodiments, the spiral chute further comprises a plurality of sidewall sectors to form an outer sidewall.

According to embodiments, at least one sidewall sector is a molded or thermoformed body of a thermoplastic material or a body of metallic material (for example a sheet of steel or aluminium) or a body of composite material and wherein at least two edges of the sidewall sector are stiffened.

According to embodiments, the stiffened edges of the sidewall sector comprise respective lips bent with respect to the main surface of the sidewall sector.

In embodiments, the central pillar forms the internal sidewall.

In embodiments, the central pillar comprises a plurality of longitudinal slits and each of the ribs comprises a hook configured to penetrate inside one of the longitudinal slits and hang in a cantilever manner the rib on the pillar.

In embodiments, the bottom sector and/or the sidewall sector is screwed or riveted onto two ribs.

In embodiments, the spiral chute further comprises a counter-plate for clamping in sandwich fashion a portion of the bottom sector and/or of the sidewall sector to a rib.

### BRIEF DESCRIPTION OF THE DRAWINGS

The present invention will become fully clear from the following detailed description, provided by way of a non-limiting example, to be read with reference to the accompanying drawings, in which:
- Fig. 1 is a first view of an embodiment of a spiral chute according to the invention;
- Fig. 2 is a second view of the spiral chute according to Fig. 1;
- Fig. 3 is a view of the ribs protruding in a cantilever manner from the central pillar of the spiral chute according to the invention;
- Fig. 4 is a view, from above, of the components shown in Fig. 3;
- Fig. 5a is a longitudinally sectioned view of the chute according to Fig. 1 with an enlarged detail (Fig. 5a) for showing the preferred mode for engaging in cantilever fashion the ribs with the central pillar;
- Fig. 6 shows a bottom sector, a sidewall sector and a pair of ribs;
- Figs. 7 and 8 show an axonometric view of a bottom sector and a sidewall sector connected to a rib with associated counter-plates which are used as a clamp for clamping the sectors (or segments) of the spiral chute;
- Fig. 9 shows a plan view of a bottom sector and a sidewall sector connected by a rib and Fig. 9a shows an enlarged detail; and
- Figs. 10 and 11 illustrate the steps for assembly of the spiral chute according to the invention.

### DETAILED DESCRIPTION

As mentioned above, a spiral chute allows the transportation of objects, for example packages or packets, from a first position located at a first height to a second position located at a second height, lower than the first height. Typically, these objects P slide along the spiral chute and reach the second position by means of gravity, without the use of conveyor belts, as usually is the case along horizontal or upward sections. These are often used since they have a smaller volume and the exit opening may be nearly in the same position as the entry opening.

Owing to space problems, often within installations all the conveyor belts are located on a higher level than that where the vans are parked for loading, and the transfer from the higher level to the lower level, which is sometimes over a distance of even 10 or so metres, is performed by means of chutes, practically one situated opposite each van loading position.

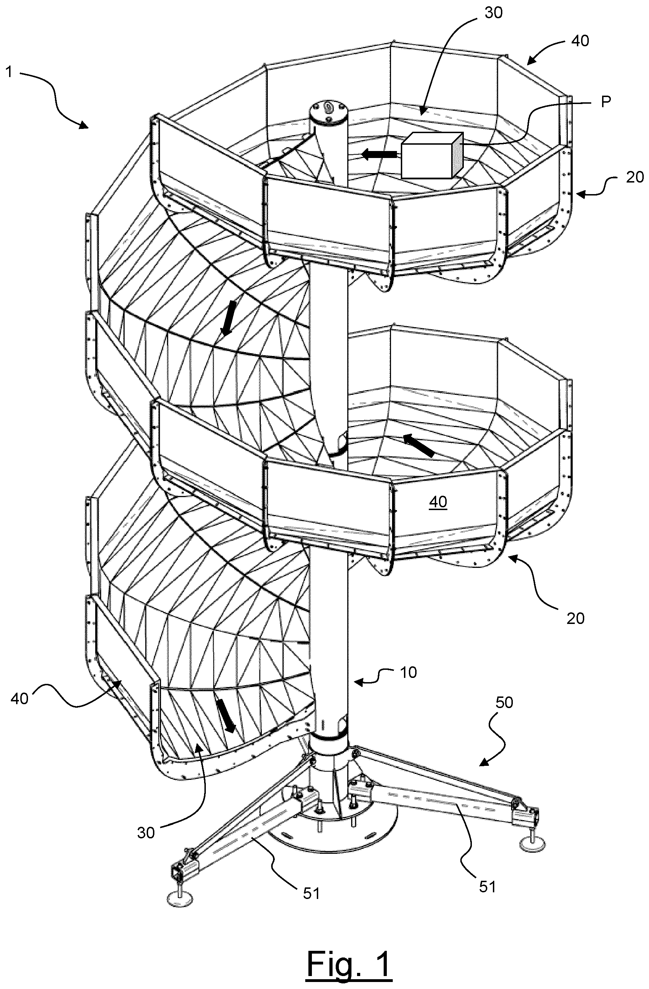

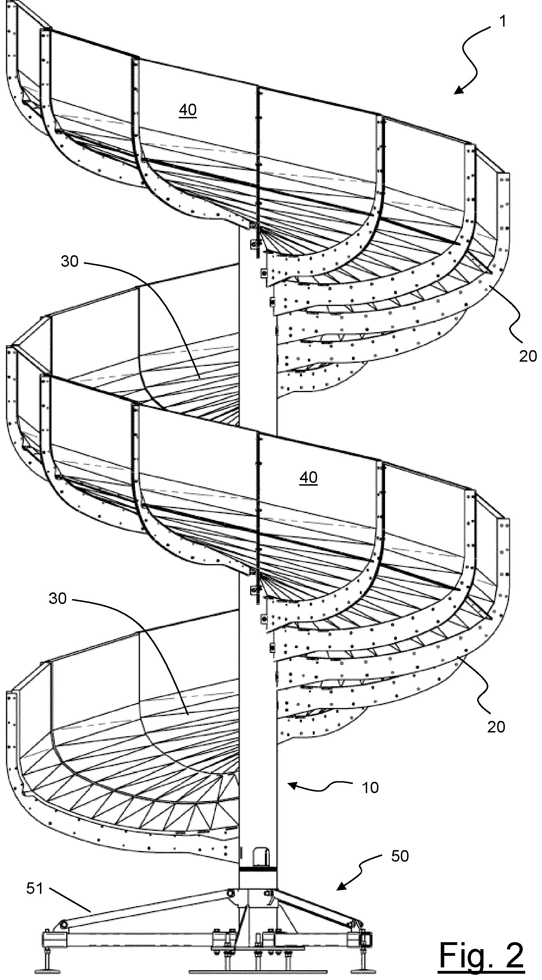

Figures 1 and 2 show a spiral chute according to an embodiment of the invention. The spiral chute will be identified, overall, by the reference number 1. The spiral chute 1 according to the invention preferably comprises a central pillar 10, a plurality of ribs 20, a plurality of bottom sectors 30 and a plurality of sidewall sectors 40.

The spiral chute 1 according to the invention may be stably fixed on the ground or may rest thereon by means of a support structure 50, for example a structure 50 with three legs 51. Depending on the height requirements to be satisfied, the pillar 10 may consist of a single piece or two or more pieces.

According to embodiments, the central pillar 10 is a hollow tube with a circular cross-section.

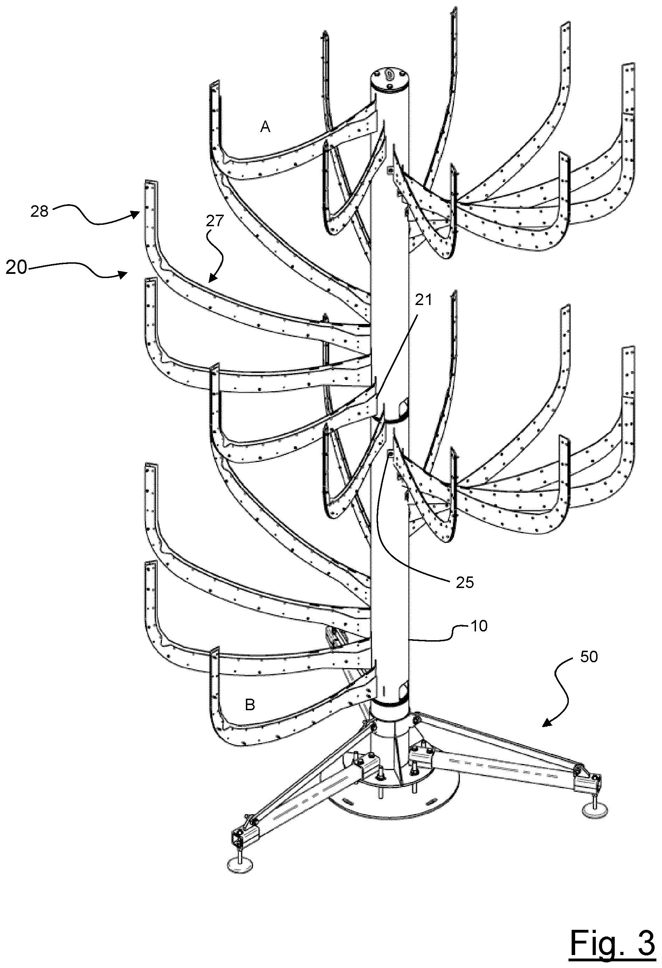

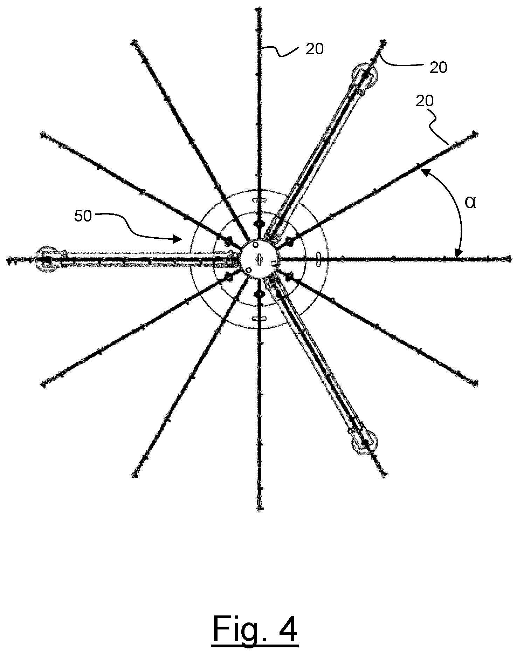

According to embodiments, as for example shown in Fig. 3, the ribs 20 are fixed in a cantilever manner to the central pillar 10 and protrude radially therefrom. Preferably, the ribs 20 are angularly equidistant. In other words, as shown in Fig. 4, preferably two circumferentially successive ribs 20 form together a same angle α (alpha), which may be 15°, 30° or 45°. Preferably, the angle α between two successive ribs is 30°. Fig. 3 shows a plurality of ribs radially protruding from the central pillar and arranged angular equidistant. The ribs 20 extend from the first height A (essentially corresponding to the starting position of the object to be transported) to the second height B (essentially corresponding to the arrival position of the object to be transported).

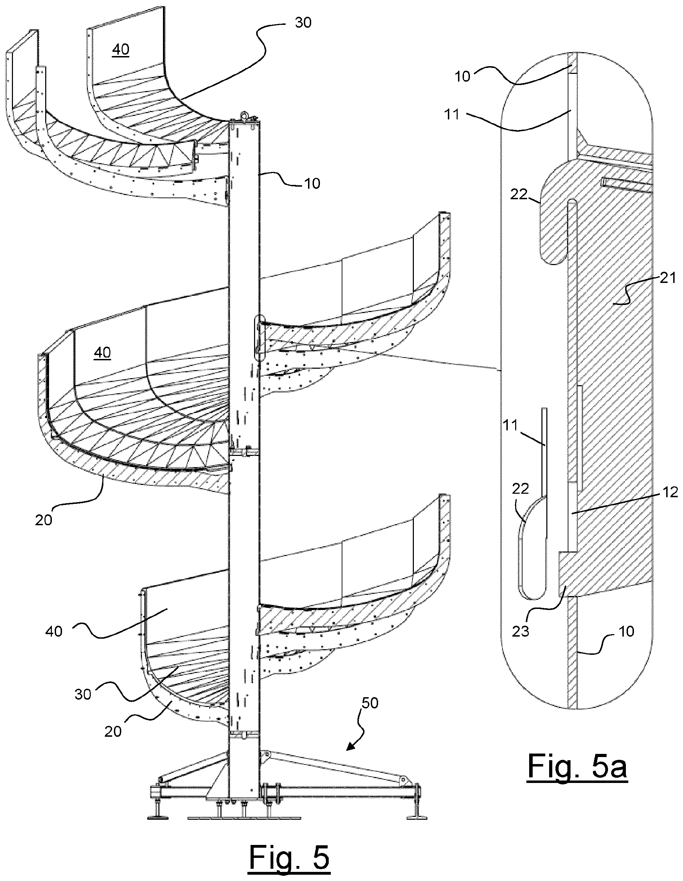

The ribs 20 may be fixed to the pillar 10 in any way. For example, they may be welded or bolted. However, according to a preferred embodiment of the present invention, the ribs 20 are hooked onto the central pillar 10. Fig. 5 is a longitudinally sectioned view of a spiral chute 1 according to the invention and Fig. 5a is an enlarged detail which shows a possible advantageous mode for fixing the ribs 20 to the central pillar 10. A curved nose 22 is provided at the base 21 of each rib 20 and is configured to penetrate inside a first longitudinal slit 11 in the pillar 10. In the final configuration, the nose 22 forms a hook and the rib 20 is essentially hung. Advantageously, in addition to the curved nose 22, a projecting lug 23 configured to penetrate inside a second longitudinal slit 12, in a position lower than that of the first longitudinal slit 11, is provided. The engagement between the lug 23 and the second longitudinal slit 12 provides the rib 20 with a greater stability in relation to the central pillar 10.

Therefore, the central pillar 10 comprises a plurality of pairs of longitudinal slits 11, 12. Each pair of slits comprises a first longitudinal slit 11 and a second longitudinal slit 12, which are aligned with each other in the longitudinal direction. This fixing mode allows the ribs 20 to be easily assembled (or disassembled) on (from) the central pillar 10.

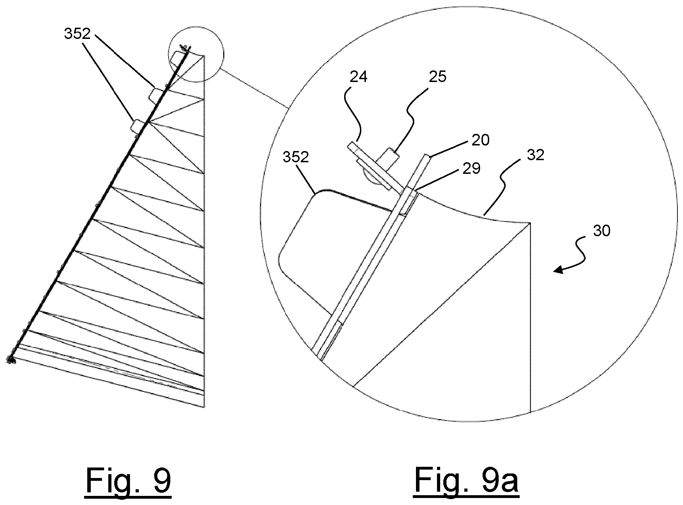

According to embodiments, for a greater stability of the ribs 20 in relation to the central pillar 10, a fixing system, in addition to the hooking system described above, may be provided. According to this embodiment, each rib 20 has a projecting bracket 24, which is angled with respect to the plane of the rib. The projecting bracket 24 has a hole for a screw 25 configured to engage inside a hole 13 of the central pillar 10, situated laterally with respect to the pair of longitudinal slits 11, 12. This embodiment is shown in Figs. 9 and 9a. Obviously, two brackets 24 could be provided, arranged opposite each other, in order to firmly clamp the rib 20 with respect to the central pillar 10.

In the spiral chute 1 according to the invention there could be ribs 20 fixed by means of the screws 25 and ribs 20 which are simply hooked in position.

Each rib 20 is essentially formed by a plate shaped so as to form a kind of bowl or cradle. Advantageously, each rib 20 comprises holes 26, the function of which will be explained below. Advantageously, the base part 21 of each rib 20 has a height greater than that of the middle part 27. The end part 28 of each rib 20, advantageously, has a height smaller than that of the middle part 26.

Advantageously, the rib 20 had a greater thickness at the base 21.

Before providing a complete description of the rib 20, a description of the bottom sector 30 and the sidewall sector 40 of the spiral chute 1 according to the present invention is provided hereinbelow.

The bottom sector 30 comprises a sliding surface 31 which has roughly the form of a triangular segment. The sliding surface 31 of one bottom sector is configured to form, together with the sliding surface 31 of other bottom sectors 30, a substantially continuous surface which extends spirally from the starting point A of an object to the arrival point B thereof. Therefore, the surface 31 of the bottom sector 30 is suitably twisted.

The bottom sector 30 comprises an inner edge 32, an outer edge 33, an upper edge 34 and a lower edge 35. The term "inner" refers to the edge which, when the bottom sector 30 is assembled, is located next to the central pillar 10. Similarly, the term "outer" refers to the edge opposite to the inner edge; it defines (together with other bottom sectors), essentially, the outer perimeter of the sliding surface. The term "upper" refers to the edge 34 which is located at a greater height along the direction of movement of an object which is slid along the spiral chute 1. Finally, the term "lower" refers to the edge 35 which is located at a lower height along the direction of movement of an object which is slid along the spiral chute. Therefore, considering each single bottom sector 30, an object slides from the upper edge 35 to the lower edge 35, in the space essentially comprised between the inner edge 32 and the outer edge 33.

Preferably, the surface 31 of at least one bottom sector 30 is faceted. More preferably, the surface 31 of all the bottom sectors 30 is faceted. The term "faceted" is understood as meaning that the surface between the four aforementioned edges 32, 33, 34 and 35 is not uniform, but is divided into geometric figures. Each geometric figure forms an angle with respect to an adjacent geometric figure. For example, the geometric figures which form the facets are triangles, preferably irregular triangles. Each triangle has the base side along the upper edge 35 (or lower edge 34) and the vertex along the lower edge 34 (or upper edge 35). Therefore, two adjacent triangles share a same side.

The Applicant has found that such a faceted surface 31 plays an important part in guiding an object along an optimum trajectory, so that the object does not hit the outer sidewall 40 or the support pillar 10. Also the speed of descent is more uniform compared to a surface which is not faceted.

The number of triangular facets may be same along the lower edge 34 and along the upper edge 35. The number also varies depending on the length of the upper/lower edge. The Applicant has tested a number of facets (i.e. a number of triangles with base on the upper or lower edge) ranging between 5 and 15. According to the Applicant, an optimum number of facets is about 10, for example 8-12, in particular for example 9. The number of facets may be an even or odd number, preferably an odd number.

The bottom sector 30 may be made of any material, for example metal (e.g. iron, stainless steel, aluminium, or alloys thereof) or a thermoplastic material or a composite material or any combination of these. For given applications, thermoplastic materials are preferred. Suitable thermoplastic materials may be PVC, ABS, plexiglass, polypropylene, PET, polycarbonate, nylon or the like. These materials are preferred for cost and weight reasons compared to metallic materials. The lower weight is important, in particular in order to reduce the transportation costs and the physical effort of the assembly personnel.

According to preferred embodiments, the bottom sectors in thermoplastic material are molded in any known way, also by injection, or thermoformed. Thermoforming can take place under pressure or under vacuum.

Another important advantage of thermoplastic materials is that they provide a substantially non-magnetic sliding surface. This aspect is particularly important when the objects to be transported are electronic objects which risk malfunctions owing to the magnetic fields created by the metals. Alternatively, stainless steel or aluminium may be used.

Preferably, each bottom sector 30 comprises an upper lip 351 which projects at the bottom from the upper edge 35. The upper lip 351 is configured to be connected to a rib 20.

Preferably, each bottom sector 30 comprises a lower lip 341 which projects at the bottom from the lower edge 34. The lower lip 341 is also configured to be connected to a rib 20.

Preferably, each bottom sector 30 comprises an outer lip 331 which projects at the bottom from the outer edge 33. The outer lip 331 is configured to engage with a respective lip of a sidewall sector 40 which will be described below.

Preferably, each lip 331, 341, 351 comprises holes corresponding to the holes in the ribs 20. Each of the lips 331, 341, 351 may be continuous or formed by separate sections.

Each thermoformed bottom sector 30, thanks to the material and the lips 331, 341, 351 is self-supporting. For the purposes of the present description and the claims, it is intended that a bottom sector is self-supporting since, when it is constrained to two successive ribs 20, it is able to withstand a load of at least 50 kg/dm² without showing evident deformation and/or permanent deformation. The bottom sector according to the present invention is not stiffened by other components between one rib and the other.

The stiffness is determined by the fact that it is made of a thermoplastic material, by the fact that it is thermoformed and by the fact that it includes at least two opposite lips 341, 351 facing in a direction other than that of the sliding plane (downwards, substantially at about 90 °).

At the sliding plane 31, each bottom sector 30 has a thickness of a few millimeters, for example 2, 3, 4, 5 or more millimeters. According to embodiments, the thickness of a bottom sector at the sliding plane 31 is comprised between about 2 mm and about 4 mm, for example between 2.5 mm and 3.5 mm.

As mentioned above, according to embodiments, the surface 31 of at least one bottom sector 30 is faceted. More preferably, the surface 31 of all the bottom sectors 30 is faceted. The facets also help to stiffen the bottom sector, and in particular its surface 31.

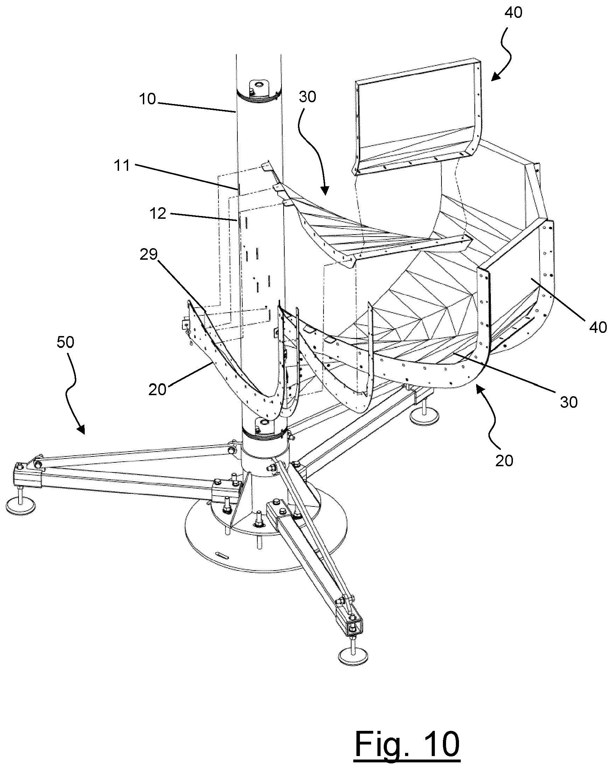

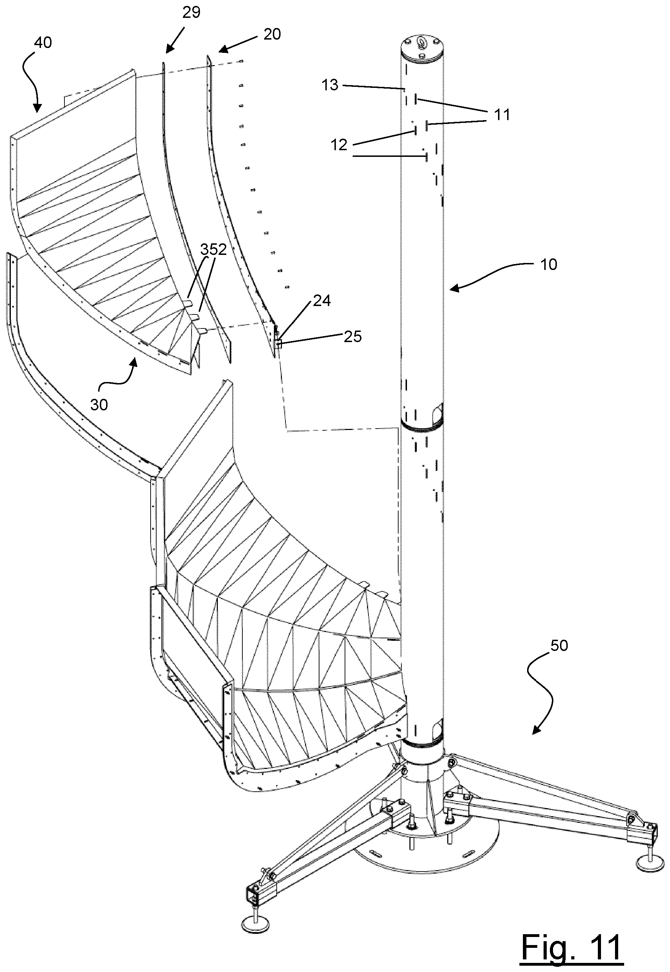

According to preferred embodiments, each upper lip 351 or lower lip 341 is configured to be connected to the rib 20, preferably arranging in between a counter-plate 29 which is partially similar to a rib 20. The assembly methods will be clarified below with reference to Figures 10 and 11. The connection to the rib 20 is performed by inserting the lip 351, 341 between the rib and the counter-plate 29, thus creating a kind of clamp which clamps together the two lips of two sectors. This ensures easy assembly and the use of fewer screws. Alternatively, fixing may be performed only with screws or rivets.

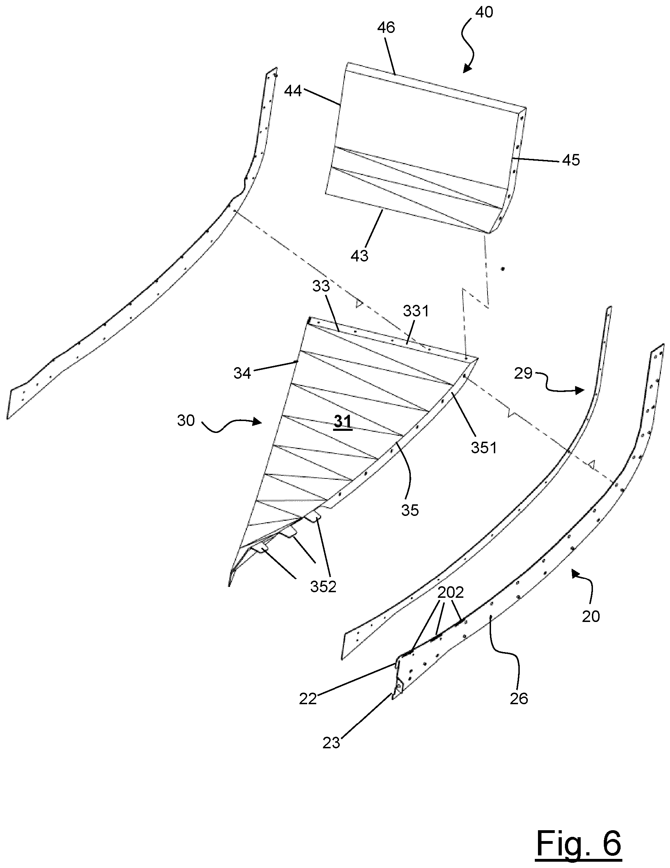

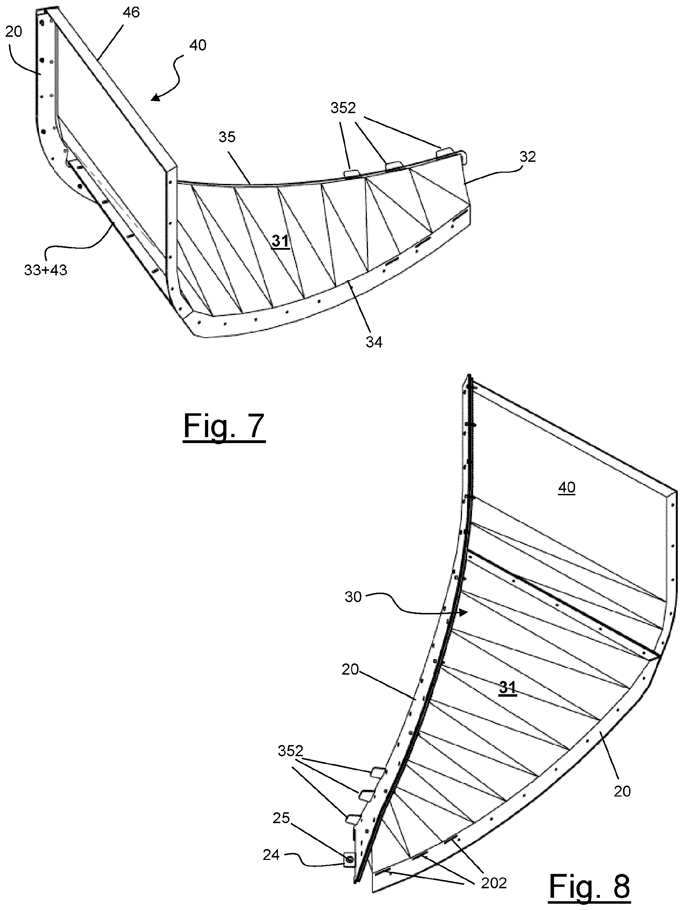

According to a preferred embodiment the upper edge 35 comprises one or more tongues 352 projecting outwards. For example, two or three support tongues 352 may be provided, as shown in Figures 6-8. Preferably, the support tongues 352 are provided in the vicinity of the inner edge 32. A rib 20 designed to be connected to a bottom sector 30 with the tongues 352 comprises three slits 202. The tongues 352 allow a bottom sector 30 to be joined to a rib 20, in particular in a zone which cannot be easily accessed by tools (electric screwdriver or spanner).

Preferably, the outer edge 33 of each bottom sector 30 is configured to be connected to a sidewall sector 40. More particularly, the sidewall sector 40 is substantially quadrangular with a first edge 43 configured to be joined to the outer edge 33 of the bottom sector 40, a second edge 45 which is substantially an extension of the upper edge 35, a third edge 44 which is substantially an extension of the lower edge 34 and a fourth edge 46 which defines the upper profile of the sidewall of the spiral chute 1.

Preferably, the four edges 43, 44, 45, 46 of the sidewall sector 40 comprise respective lips, entirely similar to the lips of the bottom sector. Owing to these lips, the sidewall sector may be connected to the bottom sector 30 along its outer edge 33 and also may be connected to the ribs 20. The lips of the edges 43, 44, 45 and 46 can extend along the entire respective edge or along a part thereof. The lips can be continuous or in separate sections.

The sidewall sector 40 can be in any material, for example in metal (for example iron, stainless steel, aluminium, or their alloys) or in a thermoplastic material or in a composite material or in any combination of these. For certain applications, thermoplastics are preferred. Suitable thermoplastic materials can be PVC, ABS, plexiglass, polypropylene, PET, polycarbonate, Nylon or the like. Such materials are preferred for cost and weight reasons over metallic materials. Lower weight is important, particularly to reduce transport costs and the effort of the assembly personnel.

According to preferred embodiments, the side walls made of thermoplastic material are moulded in any known way, including by injection, or thermoformed.

According to embodiments, depending on the use for which the spiral chute is intended, one or more sidewall sectors may not be present to provide intermediate access points, i.e. to create windows in correspondence with which a box can be introduced or withdrawn.

According to embodiments, sidewall sectors can be provided in different materials, for example of metal where collisions with particularly strong packs are foreseen and of thermoplastic material at less critical parts of the path.

The solution of the present invention is therefore particularly advantageous in which the individual bottom sectors are separated (and separable) from the sidewall sectors.

According to embodiments, the sidewall sector 40 comprises an at least partially faceted surface. The facets are preferably similar to the facets of the bottom sector 30 already described above. Preferably, however, the top part of the sidewall sector 40 is without facets. The sidewall sector 40 may be made using the same materials as the bottom sector.

Having described in detail the various components of the modular spiral chute 1 according to the present invention, the various assembly steps will now be described. The sequence of the various steps is not binding. Assembly may be performed equally well starting from the bottom or the top, proceeding stepwise or assembling first all the ribs.

For example, Figures 10 and 11 show a central pillar 10 supported by a three-leg structure 50. The central pillar 10 is formed by two parts and comprises a plurality of longitudinal slits 11,12. Preferably, it comprises a plurality of pairs of longitudinal slits 11, 12, wherein the slits of each pair are aligned. The pairs of longitudinal slits extend along a helical path. According to the embodiment shown in the figures, a hole 13 is also provided for each pair of slits.

Assembly of the spiral chute may be performed as follows:
a) First the support structure 50 is assembled.
b) Then one or more sections of the central pillar 10 is/are assembled on the support structure.
c) The ribs 20 are assembled on the central pillar 10.
d) The bottom and sidewall sectors are then applied (placed), preferably from the top downwards.
e) The bottom and sidewall sectors are fixed to the ribs, possibly together with the associated counter-plates. A shimming step is performed, where necessary.

One advantage of the chute according to the present invention is that it is possible to assemble on the same rib structure suitably shaped bottom sectors and/or sidewall sectors which are made of different materials, for example plastic/thermoplastic materials, iron, aluminium, steel, stainless steel, composite materials, or any other material, if necessary in combination.

Another advantage of the spiral chute according to the present invention is that it is possible to remove a sidewall sector in an intermediate position and provide an intermediate entrance for objects.

Another advantage of the spiral chute according to the present invention is that the bottom and sidewall sectors may be made of many materials, depending on the use. Furthermore, very advantageously, it may be decided to create the bottom made of a first material and the sidewalls made of second material, different from the first material.

Another advantage of the spiral chute according to the invention is that a bottom and/or sidewall sector may be easily replaced without having to disassemble the entire chute. The replacement may also be performed by non-specialized personnel since disassembly is easily carried out.

## Claims

1. A spiral chute (1) for conveying objects from a first position (A) to a second position (B) which is situated at a lower height than the first position (A), the spiral chute (1) comprising:
a central pillar (10),
a plurality of ribs (20) protruding radially from the central pillar (10), and
a plurality of bottom sectors (30), wherein each bottom sector (30) is supported by two circumferentially successive ribs (20) and wherein the plurality of bottom sectors (30) forms a substantially continuous spiral surface from the first position (A) to the second position (B),
wherein the ribs (20) comprise holes,
wherein at least one of the bottom sectors (30) is a body comprising a sliding surface (31) stiffened at least at one edge (33, 34, 35) of the sliding surface (31), and
wherein the sliding surface (31) is stiffened at least at two opposite edges (34, 35),
wherein the at least two stiffened edges (33, 34, 35) of the bottom sector (30) comprise respective stiffening lips (331, 341, 351), and the stiffening lips being bent with respect to the sliding surface (31) of the bottom sector (30),
**characterized in that**
the respective stiffening lips (331, 341, 351) are configured to fix the bottom sector (30) with two ribs (20), and
the stiffening lips (331, 341, 351) comprise holes corresponding to the holes in the ribs (20) for locking the bottom sector (30) with two ribs (20).

2. The spiral chute (1) of claim 1, wherein at least one bottom sector (30) comprises a faceted surface (31).

3. The spiral slide (1) of claim 2, wherein said faceted surface (31) comprises geometric figures, for example triangles having a base on either the upper edge (35) or the lower edge (34) of the bottom sector (30) and vertex on either the lower edge (34) or the upper edge (35) of the bottom sector (30), respectively.

4. The spiral chute (1) of any one of the preceding claims, wherein at least one bottom sector (30) comprises a twisted plane (31).

5. The spiral chute (1) of any one of the preceding claims, wherein at least one of the bottom sectors (30) is a body molded or thermoformed of a thermoplastic material or a body of metal material or a body of composite material.

6. The spiral chute (1) of any one of the preceding claims, further comprising a plurality of sidewall sectors (40) to form an outer sidewall.

7. The spiral chute (1) of claim 6, wherein at least one sidewall sector is a molded or thermoformed body of a thermoplastic material or a body of metal material or a body of composite material and wherein at least two edges (43, 44, 45, 46) of the sidewall sector (40) are stiffened.

8. The spiral chute (1) of claim 7, wherein the stiffened edges (43, 44, 45, 46) of the sidewall sector (40) comprise respective lips bent with respect to the main surface of the sidewall sector.

9. The spiral chute (1) of any of preceding claims, wherein the central pillar (10) forms the internal sidewall.

10. The spiral chute (1) of any of the preceding claims, wherein the central pillar (10) comprises a plurality of longitudinal slits (11, 12) and wherein each of the ribs (20) comprises a hook (22) configured to penetrate inside one of the longitudinal slits (11) and hang the rib (20) in a cantilever manner on the pillar (10).

11. The spiral chute (1) of any of the preceding claims, wherein the bottom sector (30) and/or the sidewall sector (40) is/are screwed or riveted onto two ribs.

12. The spiral chute (1) of claim 11, further comprising a counter-plate (29) for clamping in sandwich fashion a portion of the bottom sector (30) and/or sidewall sector (40) to a rib (20).

## Patentansprüche

1. Spiralrutsche (1) zum Fördern von Objekten von einer ersten Position (A) zu einer zweiten Position (B), die sich in einer niedrigeren Höhe als die erste Position (A) befindet, wobei die Spiralrutsche (1) Folgendes umfasst:
eine zentrale Säule (10),
eine Vielzahl von Rippen (20), die radial von der zentralen Säule (10) vorstehen, und eine Vielzahl von Bodenbereichen (30), wobei jeder Bodenbereich (30) von zwei umfangsseitig aufeinanderfolgenden Rippen (20) getragen ist und wobei die Vielzahl von Bodenbereichen (30) eine im Wesentlichen durchgehende spiralförmige Oberfläche von der ersten Position (A) zur zweiten Position (B) bildet,
wobei die Rippen (20) Löcher umfassen,
wobei mindestens einer der Bodenbereiche (30) ein Körper ist, der eine gleitende Oberfläche (31) aufweist, die mindestens an einer Kante (33, 34, 35) der gleitenden Oberfläche (31) versteift ist, und
wobei die gleitende Oberfläche (31) mindestens an zwei gegenüberliegenden Kanten (34, 35) versteift ist,
wobei die mindestens zwei versteiften Kanten (33, 34, 35) des Bodenbereichs (30) jeweilige Versteifungslippen (331, 341, 351) umfassen und die Versteifungslippen in Bezug auf die gleitende Oberfläche (31) des Bodenbereichs (30) gebogen sind,
**dadurch gekennzeichnet, dass**
die jeweiligen Versteifungslippen (331, 341, 351) konfiguriert sind, um den Bodenbereich (30) mit zwei Rippen (20) zu fixieren,
und
die Versteifungslippen (331, 341, 351) Löcher umfassen, die den Löchern in den Rippen (20) entsprechen, um den Bodenbereich (30) mit zwei Rippen (20) zu verriegeln.

2. Spiralrutsche (1) nach Anspruch 1, wobei mindestens ein Bodenbereich (30) eine facettierte Oberfläche (31) umfasst.

3. Spiralrutsche (1) nach Anspruch 2, wobei die facettierte Oberfläche (31) geometrische Figuren umfasst, beispielsweise Dreiecke, die jeweils eine Basis an entweder der Oberkante (35) oder der Unterkante (34) des Bodenbereichs (30) und einem Scheitelpunkt an entweder der Unterkante (34) oder der Oberkante (35) des Bodenbereichs (30) aufweisen.

4. Spiralrutsche (1) nach einem beliebigen der vorstehenden Ansprüche, wobei mindestens ein Bodenbereich (30) eine verdrehte Ebene (31) umfasst.

5. Spiralrutsche (1) nach einem beliebigen der vorstehenden Ansprüche, wobei mindestens einer der Bodenbereiche (30) ein Körper, der aus einem thermoplastischen Material geformt oder thermogeformt ist, oder ein Körper aus Metallmaterial oder ein Körper aus Verbundwerkstoff ist.

6. Spiralrutsche (1) nach einem beliebigen der vorstehenden Ansprüche, die ferner eine Vielzahl von Seitenwandbereichen (40) umfasst, um eine äußere Seitenwand zu bilden.

7. Spiralrutsche (1) nach Anspruch 6, wobei mindestens ein Seitenwandbereich ein geformter oder thermogeformter Körper aus einem thermoplastischen Material oder ein Körper aus Metallmaterial oder ein Körper aus Verbundwerkstoff ist und wobei mindestens zwei Kanten (43, 44, 45, 46) des Seitenwandbereich (40) versteift sind.

8. Spiralrutsche (1) nach Anspruch 7, wobei die versteiften Kanten (43, 44, 45, 46) des Seitenwandbereichs (40) jeweilige Lippen umfassen, die in Bezug auf die Hauptoberfläche des Seitenwandbereichs gebogen sind.

9. Spiralrutsche (1) nach einem der vorstehenden Ansprüche, wobei die zentrale Säule (10) die innere Seitenwand bildet.

10. Spiralrutsche (1) nach einem der vorstehenden Ansprüche, wobei die zentrale Säule (10) eine Vielzahl von Längsschlitzen (11, 12) umfasst und wobei jede der Rippen (20) einen Haken (22) umfasst, der konfiguriert ist, um in einen der Längsschlitze (11) einzudringen und die Rippe (20) freitragend an die Säule (10) zu hängen.

11. Spiralrutsche (1) nach einem der vorstehenden Ansprüche, wobei der Bodenbereich (30) und/oder der Seitenwandbereich (40) an zwei Rippen verschraubt oder genietet sind/ist.

12. Spiralrutsche (1) nach Anspruch 11, die ferner eine Gegenplatte (29) zum Einklemmen eines Teils des Bodenbereichs (30) und/oder des Seitenwandbereichs (40) an einer Rippe (20) in Sandwichbauweise umfasst.

## Revendications

1. Goulotte hélicoïdale (1) pour le convoyage d'objets depuis une première position (A) vers une deuxième position (B) située à une hauteur inférieure à celle de la première position (A), la goulotte hélicoïdale (1) comprenant :
un pilier central (10),
une pluralité de nervures (20) faisant saillie radialement à partir du pilier central (10), et
une pluralité de secteurs de fond (30), dans laquelle chaque secteur de fond (30) est supporté par deux nervures (20) successives selon la circonférence, et dans laquelle la pluralité de secteurs de fond (30) forme une surface hélicoïdale sensiblement continue depuis la première position (A) vers la deuxième position (B),
dans laquelle les nervures (20) comprennent des trous,
dans laquelle au moins un des secteurs de fond (30) est un corps comprenant une surface de glissement (31) raidie au moins au niveau d'un bord (33, 34, 35) de la surface de glissement (31), et
dans laquelle la surface de glissement (31) est raidie au moins au niveau de deux bords opposés (34, 35),
dans laquelle lesdits au moins deux bords raidis (33, 34, 35) du secteur de fond (30) comprennent des lèvres de raidissement (331, 341, 351) respectives, et les lèvres de raidissement étant pliées par rapport à la surface de glissement (31) du secteur de fond (30),
**caractérisée en ce que**
les lèvres de raidissement (331, 341, 351) respectives sont configurées pour fixer le secteur de fond (30) à deux nervures (20), et
les lèvres de raidissement (331, 341, 351) comprennent des trous correspondant aux trous dans les nervures (20) afin de verrouiller le secteur de fond (30) avec deux nervures (20).

2. Goulotte hélicoïdale (1) de la revendication 1, dans laquelle au moins un secteur de fond (30) comprend une surface à facettes (31).

3. Goulotte hélicoïdale (1) de la revendication 2, dans laquelle ladite surface à facettes (31) comprend des figures géométriques, par exemple des triangles présentant une base soit sur le bord supérieur (35), soit sur le bord inférieur (34) du secteur de fond (30), et un sommet respectivement soit sur le bord inférieur (34), soit sur le bord supérieur (35) du secteur de fond (30).

4. Goulotte hélicoïdale (1) de l'une quelconque des revendications précédentes, dans laquelle au moins un secteur de fond (30) comprend un plan vrillé (31).

5. Goulotte hélicoïdale (1) de l'une quelconque des revendications précédentes, dans laquelle au moins un des secteurs de fond (30) est un corps moulé ou thermoformé en un matériau thermoplastique, ou un corps en matériau métallique, ou un corps en matériau composite.

6. Goulotte hélicoïdale (1) de l'une quelconque des revendications précédentes, comprenant en outre une pluralité de secteurs de paroi latérale (40) pour former une paroi latérale externe.

7. Goulotte hélicoïdale (1) de la revendication 6, dans laquelle au moins un secteur de paroi latérale est un corps moulé ou thermoformé en matériau thermoplastique, ou un corps en matériau métallique, ou un corps en matériau composite, et dans laquelle au moins deux bords (43, 44, 45, 46) du secteur de paroi latérale (40) sont raidis.

8. Goulotte hélicoïdale (1) de la revendication 7, dans laquelle les bords raidis (43, 44, 45, 46) du secteur de paroi latérale (40) comprennent des lèvres respectives pliées par rapport à la surface principale du secteur de paroi latérale.

9. Goulotte hélicoïdale (1) de l'une quelconque des revendications précédentes, dans laquelle le pilier central (10) forme la paroi latérale interne.

10. Goulotte hélicoïdale (1) de l'une quelconque des revendications précédentes, dans laquelle le pilier central (10) comprend une pluralité de fentes longitudinales (11, 12), et dans laquelle chacune des nervures (20) comprend un crochet (22) configuré pour pénétrer à l'intérieur de l'une des fentes longitudinales (11) et suspendre la nervure (20) en porte-à-faux sur le pilier (10).

11. Goulotte hélicoïdale (1) de l'une quelconque des revendications précédentes, dans laquelle le secteur de fond (30) et/ou le secteur de paroi latérale (40) est/sont vissé(s) ou riveté(s) sur deux nervures.

12. Goulotte hélicoïdale (1) de la revendication 11, comprenant en outre une contre-plaque (29) destinée à serrer en sandwich une partie du secteur de fond (30) et/ou du secteur de paroi latérale (40) contre une nervure (20).
